# EUROPEAN PATENT APPLICATION

(11) **EP 4 501 779 A1**
(43) Date of publication of application: **05.02.2025**
(21) Application number: 24190107.3
(22) Date of filing: 22.07.2024
(51) Int. Cl.: B64C 1/36, H01Q 1/12, H01Q 1/28, H01Q 1/42

(54) **RADOME MOUNTING SYSTEM**

(30) Priority: 31.07.2023 US 202318228232
(71) Applicant: Astronics Connectivity Systems and Certification Corp., Waukegan, IL 60085 (US)
(72) Inventor: Trotter, Steve, Palatine, 60067 (US)
(74) Representative: Rentsch Partner AG

(57) **Abstract**

A mounting system for an aircraft fuselage (10) includes one or more fixed anchors (20) attached to the fuselage (10). A plurality of vertically adjustable anchors (30) are likewise attached to the fuselage (10), wherein each vertically adjustable anchor (30) includes a spinwheel (50) on a threaded shaft (60). An adapter plate (40) is attached to the fixed anchors (20) and the adjustable anchors (30), wherein a contact surface of the spinwheel (50) directly engages with the adapter plate (40).

## Description

### BACKGROUND OF THE INVENTION

### Field of the Invention

This invention relates generally to a mounting system for external aircraft electronics and/or hardware, such as a radome.

### Description of Prior Art

A radome and other components are often affixed to an outer skin of an aircraft fuselage. Given the precise tolerance required as well as the confined space available within and surrounding a radome, installation has been problematic and often difficult to duplicate. Traditional installations require trial and error in order to attach the radome in a secure manner on a variety of fuselage geometries. One such installation technique requires anchoring and shimming connection points around an adapter plate until the adapter plate is free of movement and vibration relative to the fuselage.

A need therefore exists for a mounting system that is flexible and reliable and one that is repeatable across all geometries and models of aircraft fuselages.

### SUMMARY OF THE INVENTION

The invention generally relates to a mounting system and aircraft radome for electronics and/or hardware such as antennae, communications systems, etc. A preferred mounting system includes one or more fixed anchors and a plurality of vertically adjustable anchors each attached to an aircraft fuselage.

An adapter plate is preferably affixed to the anchors such that the fixed anchors are centrally located along outer edges of the adapter plate and the vertically adjustable anchors are positioned at ends of the adapter plate.

Each vertically adjustable anchor preferably includes a spinwheel on a threaded shaft. The adapter plate is attached to the fixed anchors and the adjustable anchors so that a contact surface of the spinwheel directly engages with the adapter plate.

The subject mounting system may further include a plurality of fasteners attached between the fixed anchors and the adapter plate. Likewise, a plurality of fasteners may be attached between each spinwheel of the vertically adjustable anchors the adapter plate.

In a preferred embodiment, each of the plurality of fasteners are accessible from a top of the adapter plate. Such an arrangement facilitates assembly and modification of the mounting system.

The adapter plate is preferably fitted with electronics and hardware including antennae and/or other communication and navigation equipment within the radome and a domed cover. A skirt may be attached to a lower edge of the adapter plate to bridge the lower edge of the adapter plate to the fuselage.

Other objects and advantages will be apparent to those skilled in the art from the following detailed description taken in conjunction with the appended claims and drawings.

### BRIEF DESCRIPTION OF THE DRAWINGS

FIG. 1 shows a front perspective view of an adapter plate according to one embodiment of the invention;
FIG. 2 shows a front view of a set of anchors mounted on a fuselage according to one embodiment of the invention;
FIG. 3 shows a top perspective view of a fixed anchor according to one embodiment of the invention;
FIG. 4 shows a top perspective view of a vertically adjustable anchor according to one embodiment of the invention;
FIG. 5 shows a top perspective view of a vertically adjustable anchor according to one embodiment of the invention;
FIG. 6 shows a top perspective view of a vertically adjustable anchor according to one embodiment of the invention;
FIG. 7 shows a top perspective view of a vertically adjustable anchor according to one embodiment of the invention;
FIG. 8 shows a top view of an adapter plate mounted to a fuselage according to one embodiment of the invention;
FIG. 9 shows a top view of a vertically adjustable anchor according to one embodiment of the invention;
FIG. 10 shows a top perspective view of a connection according to one embodiment of the invention;
FIG. 11 shows a top view of an adapter plate with hardware mounted to a fuselage according to one embodiment of the invention;
FIG. 12 shows a side view of a radome mounted to a fuselage according to one embodiment of the invention; and
FIG. 13 shows a side view of a radome mounted to a fuselage according to one embodiment of the invention.

### DETAILED DESCRIPTION OF THE INVENTION

The present invention provides a mounting system for electronics and/or hardware such as a radome, antennae, etc. for an aircraft fuselage 10.

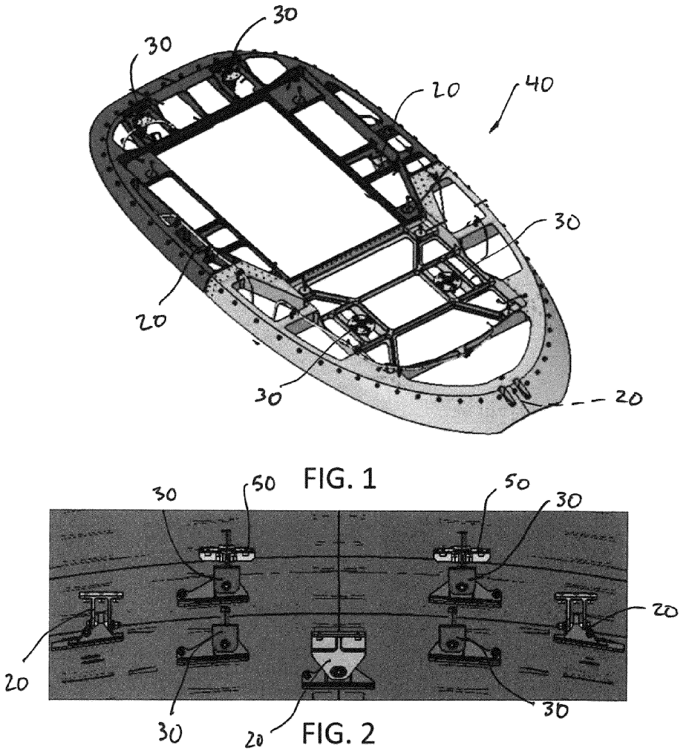

As shown in Figs. 1 and 2, a preferred mounting system includes one or more fixed anchors 20 attached to the fuselage 10. In addition, a plurality of vertically adjustable anchors 30 are attached to the fuselage 10. An adapter plate 40 is then affixed to the anchors 20, 30, as described in more detail below.

The anchors 20, 30 may be attached to the fuselage 10 using shoulder bolts and may include pivoting bases to accommodate the adapter plate 40.

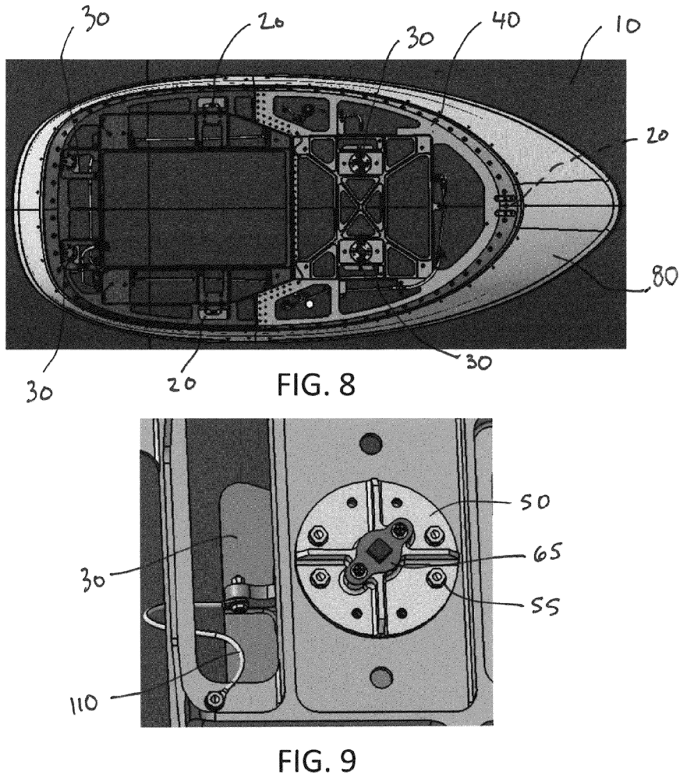

As shown in Fig. 2, in one preferred embodiment, the fixed anchors 20 are interspersed with the vertically adjustable anchors 30. Specifically, as shown in the figure, the fixed anchors 20 may be dispersed along outer edges of the adapter plate 40 and the vertically adjustable anchors 30 are positioned between those fixed anchors 20 along the adapter plate 40. More particularly, an arrangement of a single aft fixed anchor 20, two mid-aft vertically adjustable anchors 30, two central fixed anchors 20, and two forward vertically adjustable anchors 30 are shown in Figs. 1 and 8.

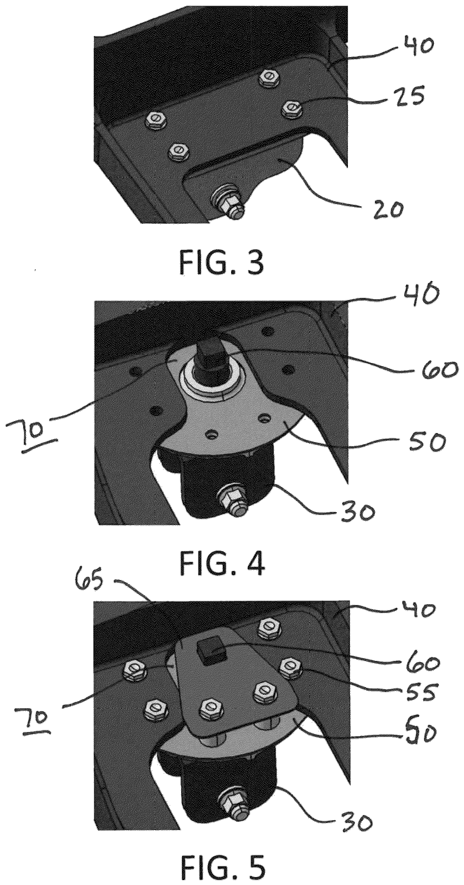

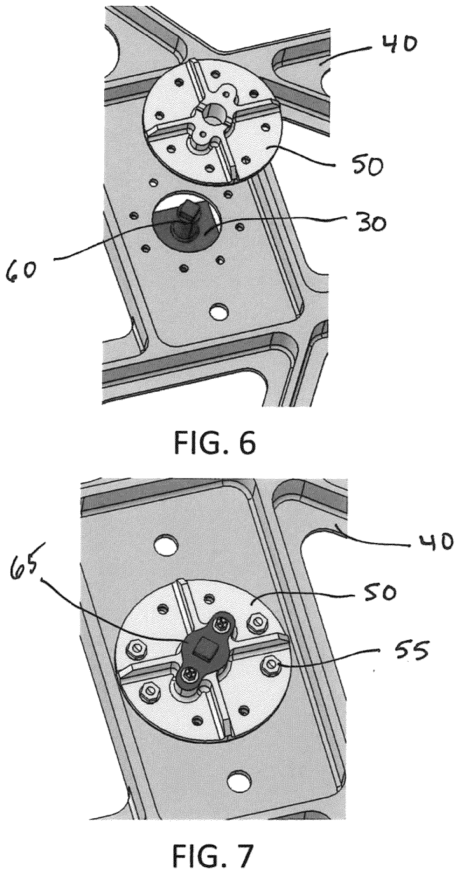

Each vertically adjustable anchor 30 preferably includes a spinwheel 50 on a threaded shaft 60. The spinwheel 50 is preferably aluminum or steel and may include a threaded core or a helical insert, such as a HELICOIL to engage the threaded shaft 60. In one preferred embodiment shown in Figs. 5 and 7, the spinwheel 50 may be fixed into position with a locking plate 65 which may be additionally affixed with fasteners as shown.

As shown in Fig. 1, an adapter plate 40 is attached to the fixed anchors 20 and the adjustable anchors 30, wherein a contact surface of the spinwheel 50 directly engages with the adapter plate 40. The adapter plate 40 is thus configured to accommodate aircraft electronics within the radome include antennae and related communications and guidance systems. The adapter plate 40 may be a single piece or a multi-piece assembly. The adapter plate 40 may further include bosses for antenna mounting and/or channels 70 for engagement with anchors 20, 30.

In one preferred embodiment of the invention, the adapter plate 40 includes a channel 70 to accommodate an outer diameter of the spinwheel 50. The contact surface of the spinwheel 50 preferably engages with a connection surface 75 of the adapter plate 40 within the channel 70.

As shown in Fig. 3, the subject mounting system may further include a plurality of fasteners 25 attached between the fixed anchors 20 and the adapter plate 40. The fasteners may comprise nuts and bolts, rivets or other appropriate connectors for maintaining the two components into a fixed position with each other.

Likewise, as shown in Figs. 4-7, the subject mounting system may further include a plurality of fasteners 55 attached between each spinwheel 50 of the vertically adjustable anchors 30 the adapter plate 40. In a preferred embodiment of the invention, the spinwheel 50 may be configured to engage upwardly on the adapter plate 40 in some areas (as shown in Figs. 4 and 5) and downwardly in other areas (as shown in Fig. 6 and 7). Fig. 5 shows the additional placement of a locking plate 65 to maintain a desired position of the spinwheel 50. As shown, the threaded shaft 60 may include a square or similar polygonal head that engages with a corresponding aperture in the locking plate 65. Additionally, the locking plate 50 may be affixed with one or more fasteners to the spinwheel 50.

Specifically, as shown in Figs, 1 and 8, a pair of rearward vertically adjustable anchors 30 may be connected to engage the adapter plate 40 in an upwardly biased connection and a pair of forward vertically adjustable anchors 30 may be connected to engage the adapter plate in a downwardly biased connection. Together, these anchors 20, 30 and a preferred arrangement maintains a tight-fitting and immovable connection between the adapter plate 40 and the fuselage 10. This is critical given the forces exerted on the radome 100 during operation and maintenance of the aircraft - any small tolerance or movement may become much greater during operation.

In a preferred embodiment, each of the plurality of fasteners 25, 55 are accessible from a top of the adapter plate 40. Such an arrangement facilitates assembly and modification of the mounting system.

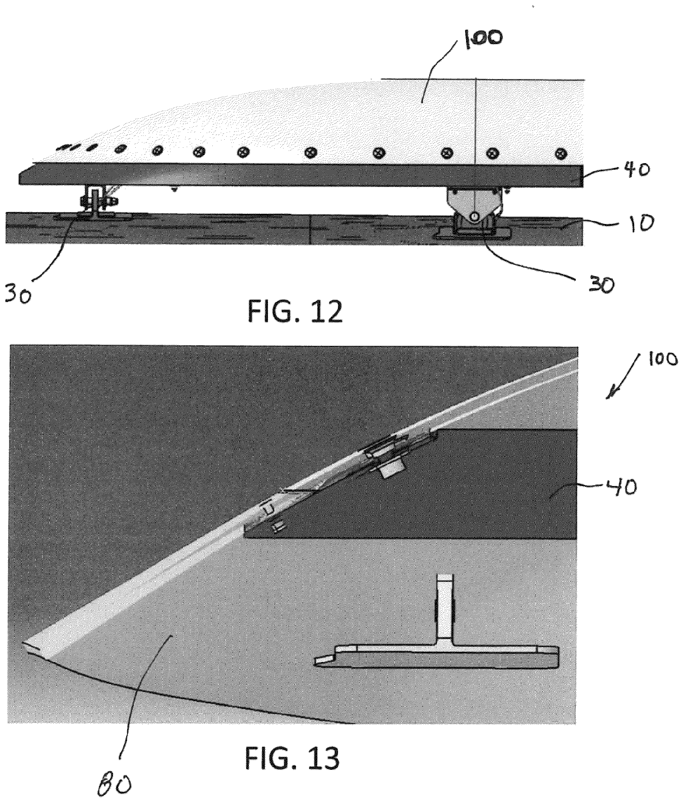

The adapter plate 40 is preferably fitted with electronics and hardware including antennae and/or other communication and navigation equipment within the radome and a domed cover. A skirt 80 may be attached to a lower edge of the adapter plate 40, the skirt 80 bridging the lower edge of the adapter plate 40 to the fuselage 10. The skirt 80 preferably enhances aerodynamics and helps protect the hardware and electronics within the radome. The radome extends approximately 6-12 inches over the fuselage 10 and the skirt 80 preferably extends downward from the adapter plate 40 into flush contact with the fuselage 10, such as shown in Figs. 12 and 13.

A related method for mounting hardware and/or electronics to an aircraft fuselage using the apparatus described above may include attaching two or more fixed anchors 20 to the fuselage 10 using fasteners 25 as described above. Next, a plurality of vertically adjustable anchors 30 may be attached to the fuselage, wherein each vertically adjustable anchor includes a spinwheel 50 on a threaded shaft. The adapter plate 40 is preferably directly engaged with the vertically adjustable anchors 30 wherein a contact surface of the spinwheel 50 directly engages with the adapter plate 40. The respective spinwheels 50 are fastened to the adapter plate 40 each with a plurality of fasteners 55.

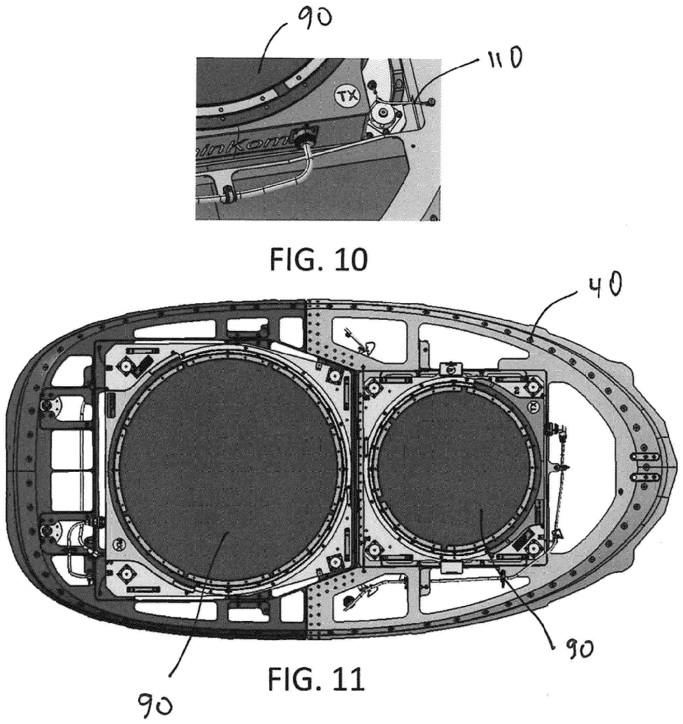

In a preferred embodiment of this invention, the adapter plate 40 is first attached to the fixed anchors 20 and then the adjustable anchors 30. In this manner, at least two fixed points along the adapter plate 40 are established and then the spinwheels 50 are rotated into direct contact with the underside of the adapter plate 40 and, separately, the topside of the adapter plate 40 before fastening the respective spinwheels 50 to the adapter plate 40. In addition, as shown in Figs. 9 and 10, ground straps 110 may be then attached to each of the antennae 90, the fixed anchors 20 and the adjustable anchors 30, preferably using pre-installed ground screws at each anchor point.

The invention illustratively disclosed herein suitably may be practiced in the absence of any element, part, step, component, or ingredient which is not specifically disclosed herein.

While in the foregoing detailed description this invention has been described in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

## Claims

1. A mounting system for an aircraft fuselage (10) comprising:
one or more fixed anchors (20) attached to the fuselage (10);
a plurality of vertically adjustable anchors (30) attached to the fuselage (10), wherein each vertically adjustable anchor (30) includes a spinwheel (50) on a threaded shaft (60); and
an adapter plate (40) attached to the fixed anchors (20) and the adjustable anchors (30), wherein a contact surface of the spinwheel (50) directly engages with the adapter plate (40); and
a locking plate (65) engageable with the adapter plate (40) and the spinwheel (50).

2. The mounting system of Claim 1 wherein the spinwheel (50) is one of aluminum or steel.

3. The mounting system of Claim 1 wherein the threaded shaft (60) engages with a threaded hole within the spinwheel (50).

4. The mounting system of Claim 1 wherein the fixed anchors (20) are interspersed with the vertically adjustable anchors.

5. The mounting system of Claim 4 wherein the fixed anchors (20) are centrally located along outer edges of the adapter plate (40) and the vertically adjustable anchors (30) are positioned at ends of the adapter plate (40).

6. The mounting system of Claim 1 wherein the adapter plate (40) includes a channel (70) to accommodate an outer diameter of the spinwheel (50).

7. The mounting system of Claim 6 wherein the contact surface of the spinwheel (50) engages with a connection surface of the adapter plate (40) within the channel (70).

8. The mounting system of Claim 1 wherein a plurality of fasteners (55) are attached between each spinwheel (50) and the adapter plate (40).

9. The mounting system of Claim 7 wherein the plurality of fasteners (55) are accessible from a top of the adapter plate (40).

10. The mounting system of Claim 1 further comprising a skirt (80) attached to a lower edge of the adapter plate (40), the skirt (80) bridging the lower edge of the adapter plate (40) to the fuselage (10).

11. The mounting system of Claim 1 comprising one aft fixed anchor (20), two mid-aft vertically adjustable anchors (30), two central fixed anchors (20), and two forward vertically adjustable anchors (30).

12. A method for mounting hardware and/or electronics to an aircraft fuselage (10) comprising:
attaching two or more fixed anchors (20) to the fuselage (10);
attaching a plurality of vertically adjustable anchors (30) to the fuselage (10), wherein each vertically adjustable anchor (30) includes a spinwheel (50) on a threaded shaft (60); and
attaching an adapter plate (40) to the fixed anchors (20) and the adjustable anchors (30);
directly engaging the adapter plate (40) with the vertically adjustable anchors (30) wherein a contact surface of the spinwheel (50) directly engages with the adapter plate (40);
fastening the spinwheel (50) to the adapter plate (40) with a plurality of fasteners (55); and
engaging a locking plate (65) with the adapter plate (40) and the spinwheel (50) to maintain a desired position of the spinwheel (50).

13. The method of Claim 12 further comprising:
first attaching the fixed anchors (20) to the adapter plate (40) and then the adjustable anchors (30).

14. The method of Claim 12 further comprising:
rotating the spinwheel (50) into direct contact with the underside of the adapter plate (40) before fastening the spinwheel (50) to the adapter plate (40).

15. The method of Claim 12 further comprising:
Attaching ground straps (110) to each of the fixed anchors (20) and adjustable anchors (30).
